# EUROPEAN PATENT APPLICATION

(11) **EP 3 326 980 A1**
(43) Date of publication of application: **30.05.2018**
(21) Application number: 16201109.2
(22) Date of filing: 29.11.2016
(51) Int. Cl.: C03C 17/30, C09D 183/04

(54) **HEAT RAY SHIELDING PARTICLE CONTAINING COMPOSITION AND HEAT RAY SHIELDING FILM**

(71) Applicant: Evonik Degussa GmbH, 45128 Essen (DE)
(72) Inventor: LEE, Dr., Fang-Cheng, 31040 Chungtung, Hsinchu (TW); Steiger, Dr., Jürgen, 64285 Darmstadt (DE)

(57) **Abstract**

The invention relates to a heat ray shielding particle containing composition comprising (1) a polysiloxane, (2) a heat ray-shielding particle, (3) a photopolymerization initiator and (4) a solvent. The composition of the present invention can be photo cured to prepare heat ray shielding films with a lower dosage of the heat ray-shielding particle, compared with conventional heat ray shielding films. The present invention also relates to the heat ray shielding films prepared by photo curing the composition of the present invention, and a process for preparing the heat ray shielding film.

## Description

### Field of the invention

The present invention relates to a heat ray shielding particle containing composition and the heat ray shielding film formed thereof.

### Background

It has been conventional to apply heat ray shielding films on building or car windows for the purpose of increasing air conditioning efficiency of buildings or cars. And films formed of polysiloxanes have been reported.

For instance, EP1288270 has disclosed a transparent silicone film-forming composition, which could be applied on a transparent substrate such as plastics and glasses used for windows of buildings and vehicles to form a bright and transparent film to exhibit ultraviolet and infrared protective properties. The silicone film-forming composition, which comprises the reaction product of an alkoxysilane having an epoxy group, and an alkoxysilane having an amino group, is coated on glasses, and then dried for 0.3-1 hour (dry to the touch) to form the film. However, the film must be dried further for 12-24 hours to improve the hardness.

US8216670 has disclosed a heat ray shielding glass for vehicles, including a glass substrate and a heat ray shielding film formed on at least one surface of the glass substrate. This heat ray shielding film comprises conductive oxide ultrafine particles dispersed in the film and a silica binder for binding the ultrafine particles to each other. The silica binder is the hydrolysis and polycondensation product of a tetraalkoxysilane and a trialkoxysilane. The film is formed via a heat treatment at a temperature of 120-250°C, which however could result in the oxidation of the conductive oxide ultrafine particles and the thermal decomposition of the silica binder.

The present inventors explored the possibility to cure certain polysiloxanes via photopolymerization to form heat ray shielding films and achieved the present invention.

### Summary of the present invention

The present invention provides a heat ray shielding particle containing composition, comprising:
(1) a polysiloxane which is the hydrolytic condensation product of at least the following reactants A and B:
   A. an alkoxysilane having the following structure (I)

      (R¹)ₘSi(R²)ₙ(OR³)ₚ (I)

      in structure (I),
      R¹ is independently an organic group having at least one photopolymerizable group,
      R² is independently H, or an alkyl having 1-5 carbon atoms,
      R³ is independently an alkyl or an alkoxyalkyl having 1-5 carbon atoms, m is an integer of 1 or 2,
      n is an integer of 0, 1 or 2,
      p is an integer of 1, 2 or 3,
      m + n + p = 4,
      R¹, R² and R³ are optionally substituted by one or more hetero atoms,
   B. an alkoxysilane having the following structure (II)

      (R⁴)ₓSi(OR⁵)₄₋ₓ (II)

      in structure (II),
      R⁴ is independently H, or an alkyl having 1-5 carbon atoms, optionally substituted by one or more hetero atoms,
      R⁵ is independently an alkyl having 1-5 carbon atoms, optionally substituted by one or more hereto atoms,
      x is an integer of 0, 1, 2 or 3,
(2) a heat ray shielding particle,
(3) a photopolymerization initiator, and
(4) a solvent.

It has been surprisingly found that the heat ray shielding particle containing composition of the present invention could achieve the same performance as conventional ones with lower dosage of the heat ray shielding particle after it is photo cured.

The present invention also provides a heat ray shielding film formed by photo curing the heat ray shielding particle containing composition of the present invention.

The present invention further provides a process for preparing the heat ray shielding film of the present invention, comprising the steps of:
(1) coating the composition of the present invention on a substrate;
(2) drying the coated substrate to remove the solvent; and
(3) photo curing the dried composition to form the film.

### Detailed description of the present invention

The heat ray shielding particle containing composition comprises the polysiloxane which is the hydrolytic condensation product of at least the reactants A and B.

For the reactant A, an alkoxysilane having the following structure (I),

(R¹)ₘSi(R²)ₙ(OR³)ₚ (I)

wherein
R¹ is independently an organic group having at least one photopolymerizable group,
R² is independently H, or an alkyl having 1-5 carbon atoms,
R³ is independently an alkyl or an alkoxyalkyl having 1-5 carbon atoms,
m is an integer of 1 or 2,
n is an integer of 0, 1 or 2,
p is an integer of 1, 2 or 3,
m + n + p = 4,
R¹, R² and R³ are optionally substituted by one or more hetero atoms,
it is preferable that R¹ is independently an organic group having 2-12 carbon atoms and at least one photopolymerizable group, which is preferably selected from the group consisting of vinyl, epoxy, isocyanate, methacryl, acryl, ureido and cinnamoyl groups.

Examples of the reactant A include but not limited to 2-(3,4-epoxycyclohexyl) ethyltrimethoxysilane, 3-glycidoxypropyl trimethoxysilane, 3-glycidoxypropyl triethoxysilane, 3-acrylamidopropyltrimethoxysilane, N-(3-acryloxy-2-hydroxypropyl)-3-aminopropyltriethoxysilane, acryloxymethyltrimethoxysilane, (3-methacrylamidopropyl)triethoxysilane, O-(methyacryloxyethyl)-N-(triethoxysilylpropyl)carbamate, N-(3-methacryloxy-2-hydroxypropyl)-3-aminopropyltriethoxysilane, methacryloxymethyltriethoxysilane, methacryloxymethyltrimethoxysilane, 3-methacryloxypropyl trimethoxysilane, 3-methacryloxypropyl triethoxysilane, 3-acryloxypropyl trimethoxysilane, methacryloxypropyltriisopropoxysilane, methacryloxypropyltris(methoxyethoxy)silane, (3-acryloxypropyl)methyldimethoxysilane, 3-(acryloxypropyl)methyldimethoxysilane, (methacryloxymethyl)methyldiethoxysilane, (methacryloxymethyl)methyldimethoxysilane, methacryloxypropylmethyldiethoxysilane, methacryloxypropylmethyldimethoxysilane.

For the reactant B, an alkoxysilane having the following structure (II),

(R⁴)ₓSi(OR⁵)₄₋ₓ (II)

wherein
R⁴ is independently H, or an alkyl having 1-5 carbon atoms, optionally substituted by one or more hetero atoms,
R⁵ is independently an alkyl having 1-5 carbon atoms,
x is an integer of 0, 1, 2 or 3,
R⁴ and R⁵ are optionally substituted by one or more hetero atoms,
it is preferable that it is a dialkoxysilane, trialkoxysilane, or a tetraalkoxysilane.

Examples of the reactant B include but not limited to tetramethyl orthosilicate, tetraethyl orthosilicate, tetrapropyl orthosilicate, tetrabutyl orthosilicate, methyltrimethoxysilane, methyltriethoxysilane, ethyltrimethoxysilane, ethyltriethoxysilane, propyltrimethoxysilane, propyltriethoxysilane, methyltripropoxysilane, dimethyldimethoxysilane, dimethyldiethoxysilane, diethyldiethoxysilane, and dimethyldibutoxysilane.

Preferably, the molar ratio of the reactant A to the reactant B is 20-1 : 1, more preferably 10-3 : 1, so as to facilitate the formation of the film and to avoid film shrinkage and/or crack, which could not be easily achieved when the molar ratio of reactant A to reactant B is too low or too high.

Besides the above reactants A and B, an unsaturated carboxylic acid can be added as a further reactant to improve the adhesion between the film and substrate.

Examples of the an unsaturated carboxylic acid include but not limited to (2Z)-2-methyl-2-nonenoic acid, (2E)-3-cyclohexyl-2-methyl-2-propenoic acid, 1,3,5,7-cyclooctatetraenecarboxylic acid, 1-cycloundecene-1-carboxylic acid, 1-cyclododecene-1-carboxylic acid, (3S)-3-isopropyl-1-cyclopentene-1-carboxylic acid, 2-methyl-3-(4-methylphenyl)acrylic acid, bicyclo[2.2.1]hept-2-ene-2,3-dicarboxylic acid, 3-methoxy-4,4-dimethyl-1-cyclopentene-1,2-dicarboxylicacid, 2a,4a,6a,6b-tetrahydrocyclopenta[cd]pentatene-1-carboxylic acid, (2Z)-2-ethyl-3-(3-hydroxyphenyl)-2-propenoic acid, 4-isothiazolecarboxylic acid, (2E)-3-(4-methylphenyl)-2-propyl-2-propenoic acid, 2-methylacrylic acid, 3-methyl-1H-pyrazole-4-carboxylic acid, (2Z)-2-(4-chlorophenyl)-3-phenyl-2-propenoic acid, 2-{2-[(4-methoxybenzyl)oxy]-2-oxoethyl}acrylic acid, (2Z)-2-(3-methoxybenzylidene)pentanedioic acid, acrylic acid, 2-bromoacrylic acid, 2-(bromomethyl)acrylic acid, 2-ethylacrylic acid, 2-propylacrylic acid, 2-(trifluoromethyl)acrylic acid.

Preferably, the molar ratio of the unsaturated carboxylic acid to the reactant A is 0-0.5 : 1, more preferably 0.15-0.35 : 1, so as to avoid film shrinkage and/or film brittleness while the molar ratio of the unsaturated carboxylic acid to the reactant A is too high.

The content of the polysiloxane in the composition is not particularly limited as long as it can form a continuous and homogeneous film on the substrate. Preferably, the polysiloxane constitutes 10-50%, more preferably, 15-35%, based on the total weight of the composition.

Suitable heat ray shielding particles for use in the present invention are not particularly limited as long as they have at least one of a good absorbing property and a good scattering property of light from the near-infrared region to the far-infrared region. The heat ray shielding particles preferably have a good visible-light-transmitting property and absorb no or little visible light (absorb equal to or less than 10%, preferably equal to or less than 5%, and more preferably equal to or less than 1 % of visible light, for example). Examples of the suitable heat ray shielding particles include metal oxide microparticles. Concrete examples include tin oxide, indium oxide, zinc oxide, tungsten oxide, chromium oxide, and molybdenum oxide. Among these examples, microparticles made of a metal oxide such as tin oxide, indium oxide, zinc oxide, and tungsten oxide having no light-absorbing property in the visible region are preferable, and microparticles made of tungsten oxide are particularly preferable.

Doping the oxide with a third component to improve the heat-input amount of near infrared radiation is very preferable. Examples of a dopant selected for this object include Sb, V, Nb, and Ta for tin oxide, Zn, Al, Sn, Sb, Ga, and Ge for indium oxide, Al, Ga, In, Sn, Sb, and Nb for zinc oxide, Cs, Rb, K, TI, In, Ca, Sr, Fe, Sn, Al and halogens for tungsten oxide. In the present invention, tin-doped indium oxide (ITO), antimony-doped tin oxide (ATO), aluminum-doped zinc oxide (AZO), indium-doped zinc oxide (IZO), silicon-doped zinc oxide, tungsten oxide doped with alkali metal element and/or halogen element is more preferable.

The heat ray shielding fine particle preferably has an average particle diameter of not greater than 200 nm, preferably of 80-160 nm. The average particle diameter is calculated from the specific surface area obtained by the BET method (Brunauer, Emmett and Teller's equation).

Commercially available products as tungsten oxide particles doped with alkali metal element and/or halogen element are sold with the brand name YMF-02A, YMDS-874 (supplied by Sumitomo Metal Mining Co., Ltd.); as indium tin oxide doped with alkali metal element and/or halogen element are sold by the brand name VP Disp CIT 20 DPM, VP Disp.CIT 20 MEK, VP Disp CIT 20 IPA (supplied by Evonik Resource Efficiency GMBH), CUR-2011, CUR-2013, CUR-2023, CUR-30 (supplied by Chung How Paint Factory Co., Ltd.).

The content of the heat ray shielding fine particle is not particularly limited as long as it can form a continuous/homogeneous, transparent film without haze. Preferably, the heat ray shielding fine particle constitutes 1-10%, more preferably 1.5-6% based on the total weight of the composition.

Suitable photopolymerization initiators for use in the present invention are not particularly limited as long as they can induce a free radical polymerization after absorbing a light energy. Particularly, the examples of the photopolymerization initiator may include, but are not limited to benzoin and its alkyl ether (e.g. benzoin, benzoin methyl ether, benzoin ethyl ether, benzoin isopropyl ether, benzoin phenyl ether, benzoin acetate), acetylbenzene (e.g. acetylbenzene, 2,2,-dimethoxy-2-phenylacetophenone, 2,2-diethoxyacetophenone, 1,1-dichloroacetophenone), aminoacetophenone (e.g. 2-methyl-4'-(methylthio)-2-morpholinopropiophen-1-one, 2-benzyl-2-(dimethylamino)-4'-morpholinobutyrophen-1-one), anthraquinone (e.g. 2-methylanthrapuinone, 2-ethylanthrapuinone, 2-tert-butylanthraquinone, 1-chloroanthraquinone, 2-amylanthraquinone), thioxanthone and xanthone (e.g. 2,4-dimethylthioxanthone, 2,4-diethylthioxanthone, 2-chlorothoxanthone, 2,4-diisopropylthioxanthone), ketal (e.g. acetophenone dimethylketal, benzyl dimethyl ketone), diphenylmethanone (e.g. diphenylmethanone, 4,4'-bis(N,N'-di-methyl-amino)benzophenone, 4,4'-bis(N,N'-di-ethyl-amino)benzophenone), acridine derivative, phenazine derivative, triphenylphosphine, phosphine oxide (e.g. (2,6-dimethoxybenzoyl)-2,4 ,4-pentyl phosphine oxide, bis(2,4,6-trimethylbenzoyl)-phenyl phosphine oxide, 2,4, 6-trimethylbenzoyl-diphenyl phosphine oxide, ethyl-2,4,6-trimethylbenzoyl-phenyl phosphinate, 1-phenyl-1 ,2-propanedione 2-O-benzoyl oxime), 1-[9-Ethyl-6-(2-methylbenzoyl)-9H-carbazol-3-yl]ethanone 1-(O-acetyloxime), 4-(2-hydroxyethoxy)phenyl-(2-propyl)ketone, 1-aminophenyl ketone and 1-hydroxy phenyl ketone (e.g. 1-hydroxycyclohexyl phenyl ketone, 2-hydroxyisopropyl phenyl ketone, phenyl 1-hydroxyisopropyl ketone, 4-isopropylphenyl 1-hydroxyisopropyl ketone), 2,2'-azobis(isobutyronitrile), all kinds of peroxide, mercaptans, and a combination thereof. These photopolymerization initiators may be used alone, or two or more of the initiators may be used in combination.

The content of the photopolymerization initiator is not particularly limited as long as it can be dissolved in a solvent to form a homogeneous solution and can sufficiently initiate the curing of the composition upon exposure to a radiation light. Preferably, the photopolymerization initiator constitutes 0.1-10%, more preferably 0.5-5% based on the total weight of the composition.

Suitable solvents for use in the present invention are not particularly limited as long as the solvent may disperse or dissolve each ingredient of the heat ray shielding particle containing composition without reacting with the ingredients, and may have an appropriate volatility and drying rate. The solvent may be a common solvent used in the art, preferably water or an organic solvent in the present invention. A mixture of two or more solvents may be used as appropriate. Examples of the organic solvent include a hydrocarbon solvent (such as toluene, xylene, hexane, cyclohexane, and n-heptane), a ketone solvent (such as acetone, methyl ethyl ketone, methyl isobutyl ketone, diisobutyl ketone, cyclohexanone, and acetylacetone), an ester solvent (such as ethyl acetate, methyl acetate, butyl acetate, cellosolve acetate, and amyl acetate), an ether solvent (such as an isopropyl ether, methyl cellosolve, butyl cellosolve, and 1,4-dioxane), a glycol diether solvent (such as diethylene glycol dimethyl ether and propylene glycol dimethyl ether), a glycol ester solvent (such as ethylene glycol monomethyl ether acetate, propylene glycol monomethyl ether acetate, and diethylene glycol monoethyl ether acetate), a glyme solvent (such as monoglyme and diglyme), a halogenated solvent (such as dichloromethane and chloroform), tetrahydrofuran, sulfolane, and acetonitrile. The solvent is preferably an ether solvent or an ester solvent.

The content of the solvent is not particularly limited as long as it can dissolve all the components to form a homogeneous solution and to show good wetting performance while coating it on the substrate. Preferably, the solvent constitutes 30-80%, more preferably 40-70%, based on the total weight of the composition.

In addition to above ingredients, various additives such as an ultraviolet-absorbing agent, an antioxidant, a light stabilizer and a coupling agent can be added to the heat ray shielding particle containing composition of the present invention as appropriate.

Examples of the ultraviolet-absorbing agent include but not limited to benzotriazole-based compounds, benzophenone-based compounds, triazine-based compounds, and benzoate-based compounds.

Examples of the antioxidant include but not limited to hindered phenolic anti-oxidants, metal deactivators, benzofuranone based anti-oxidants, hydroxylamine based anti-oxidants, phosphorous based anti-oxidants, sulfur based anti-oxidants.

Examples of the light stabilizer include but not limited to hindered amines.

Coupling agents could be used to improve the dispersion stability of the heat ray shielding particles and the adhesion of the composition to a substrate. Examples of the coupling agents include but not limited to silanes including epoxysilanes such as -glycidoxypropyltrimethoxysilane, γ-glycidoxypropylmethyldiethoxysilane, γ-glycidoxypropyltriethoxysilane and β-(3,4-epoxycyclohexyl)-ethyltrimethoxysilane; vinyl silanes such as vinyltriethoxysilane; aminosilanes such as N-β-(aminoethyl)- γ -aminopropyltrimethoxysilane, N-[3-(trimethoxysilyl)propyl]butylamine, γ-aminopropyltriethoxysilane, N-phenyl-γ-aminopropyltrimethoxysilane; and mercaptosilanes such as γ-mercaptosilane.

In one preferable embodiment of the present invention, the heat ray shielding particle containing composition comprises
(1) 10-50%, more preferably 15-35% of the polysiloxane,
(2) 1-10%, more preferably 1.5-6% of the heat ray-shielding particle,
(3) 0.1-10%, more preferably 0.5-5% of the photopolymerization initiator,
(4) 30-80%, more preferably 40-70% of the solvent,
based on the total weight of the composition.

The heat ray shielding particle containing composition of the present invention could be coated on a substrate by a wet coating method and photo cured to form a heat shielding film.

Suitable wet coating methods include, but not limited to, spin coating, bar coating, wire bar coating, blade coating, dip coating, slot coating, roller coating, casting, spray and ultrasonic spray coating.

A light is irradiated to cure the coating film. The light to be irradiated has the wave-length of up to 500 nm and the irradiation time is selected from the range of 0.1-300 seconds. It is usually in the range of 1-120 seconds but it may vary depending to the thickness of coating film.

### Examples

### Preparation of Polysiloxane A2

(1) 3-methacryloxypropyl trimethoxysilane (6.0 eq.) was pre-hydrolyzed with H₂O (6.0 eq.) and HCl (0.04 eq.) at 40°C for 10 min,
(2) tetraethyl orthosilicate (1.0 eq.) and 2-methylacrylic acid (2.0 eq.) were introduced into the pre-hydrolyzed solution obtained in step (1) at 40°C and the mixture was stirred for reaction at the same temperature for 2 hours,
(3) the obtained mixture was cooled down to ambient temperature and further stirred for 24 hours, and the Polysiloxane A2 was obtained.

### Preparation of Polysiloxane A3

(1) 3-methacryloxypropyl trimethoxysilane (6.0 eq.) was pre-hydrolyzed with H₂O (6.0 eq.) and HCl (0.04 eq.) at 40°C for 10 min,
(2) tetraethyl orthosilicate (1.0 eq.) was introduced into the pre-hydrolyzed solution obtained in step (1) at 40°C and the mixture was stirred for reaction at the same temperature for 2 hours,
(3) the obtained mixture was cooled down to ambient temperature and further stirred, and the Polysiloxane A3 was obtained.

### Examples 1-4 (E1-4) and Comparative Examples 1-2 (CE1-2)

These examples and comparative examples were designed to achieve a performance indicator of about 150% which was the sum of visible transmittance and IR absorption.

Compositions of the examples and comparative examples were formulated according to the following Table 1.

The compositions were coated on the surface of the substrates with a spin coater (Tabletop Spin Coater, Synrex Technology Co., Ltd.). The spin speed of the spin coater was adjusted to control the thickness of the coating. Then the coated substrates were dried in an oven (DH400, Dengyng Instruments Co., Ltd.) at 80-120°C for 3-5 mins. Thereafter, the dried substrates were cooled to room temperature and exposed to a radiation light having a primarily wavelength of 320-390 nm (5000-EC UV Curing Flood Lamp Systems, Dymax Co., Ltd.) to obtain a non-sticky film.

The coated substrates were tested for
- the UV transmittance, the visible transmittance, the IR transmittance and SHGC (Solar Heat Gain Coefficient, which is defined as that fraction of incident solar radiation that actually enters a building through the entire window assembly as heat gain), with an energy performance meter (EDTM Window Energy Profiler - WP4500), and
- the thickness of the coated film with a profilometer (Ambios XP200 profiler).

After the above performance test, the heat ray shielding particle dosage (g/m²) was determined and calculated according to the following procedure.

The films coated on the substrates were carefully scraped and the weight of the films (Wo) was determined. The weight of the heat ray shielding particles (W₁) was calculated by multiplying Wo by the proportion of the heat ray shielding particles in the formulated composition except the solvents. And then the heat ray shielding particle dosage (g/m²) was calculated by dividing W₁ by the coated area on the substrates.

The overall results of E1-4 and CE1-2 are indicated in the following Table 2. It can be seen that, to achieve a performance indicator of about 150% which is the sum of visible transmittance and IR absorption, E1-4 of the present invention with the polysiloxane have a much lower heat ray shielding particle dosage, compared with CE1-2 with conventional (meth)acrylates.

### Examples 5-6 (E5-6) and Comparative Examples 3-5 (CE3-5)

These examples and comparative examples were designed to achieve a performance indicator of about 130% which was the sum of visible transmittance and IR absorption, wherein E5-6 were photo cured while CE3-5 were thermal cured.

Compositions of the examples and comparative examples were formulated according to the following Table 3.

The compositions of E5-6 were coated on the surface of the substrates, dried and photo cured as E1-4.

The compositions of CE3-5 were coated on the surface of the substrates with the spin coater. Then the coated substrates were pre-dried in the oven at 80°C for 1-2 mins. Thereafter, the coated substrates were cured in the oven at 120-150°C for 3-5 mins to obtain a non-sticky film. But for CE3, a non-sticky film could not be obtained.

The coated substrates were tested or calculated for the UV transmittance, the visible transmittance, the IR transmittance, SHGC, the thickness of the coated film and the heat ray shielding particle dosage (g/m²) as E1-4.

The overall results of E5-6 and CE3-5 are indicated in the following Table 4. It can be seen that, to achieve a performance indicator of about 130% which is the sum of visible transmittance and IR absorption, E5-6 of the present invention which were photo cured have a much lower heat ray shielding particle dosage, compared with CE4-5 which were thermal cured.

**Table 1**

| | | CE1 | CE2 | E1 | E2 | E3 | E4 |
|---|---|---|---|---|---|---|---|
| Polysiloxane (g) | A2 | | | 14.8 | 14.8 | 14.8 | 14.8 |
| Acrylate Monomer (g) | dipentaerythritol hexa(meth)acrylate | 14.8 | 14.8 | | | | |
| Photopolymerization Initiator (g) | 2-benzyl-2-dimethylamino-1-(4-morpholinophenyl)-butan-1-one | 0.8 | 0.8 | 0.8 | 0.8 | 0.8 | 0.8 |
| | {1-[9-ethyl-6-(2-methylbenzoyl)carbazol-3-yl]ethylideneamino} acetate | 0.32 | 0.32 | 0.32 | 0.32 | 0.32 | 0.32 |
| Heat ray shielding particle (g) dispersed in Solvent | VP Disp CIT 20 DPM (20 wt%) | | | 4 | 8 | | |
| | CUR-2023 (20 wt%) | | 7.8 | | | 7.6 | |
| | EM-CT-20PG (20 wt%) | 7.6 | | | | | |
| | TSC-113 (20 wt%) | | | | | | 8 |
| Additives (g) | Chemsorb-326 | | 0.3 | 0.3 | 0.3 | | 0.3 |
| | Dynasylan 1189 | 1.5 | 1.5 | 0.8 | 1.5 | 1.5 | 1.5 |
| Solvent (g) | propylene glycol monomethyl ether acetate | 28 | 28 | 28 | 28 | 28 | 28 |

| | | | | | | | |
|---|---|---|---|---|---|---|---|
| VP Disp CIT 20 DPM: 20% indium tin oxide particles dispersed in 1-methoxy-2-propanol, commercially available from Evonik Resource and Efficiency GMBH. CUR-2023: 20% tungsten oxide particles doped with cesium dispersed in propylene glycol monomethyl ether acetate, commercially available from Chung How Paint Factory Co., Ltd. EM-CT-20PG: 20% tungsten oxide particles doped with cesium dispersed in propylene glycol monomethyl ether acetate, commercially available from Wellion Trading Co., Ltd. TSC-113: 20% tungsten oxide particles doped with cesium dispersed in propylene glycol monomethyl ether acetate, commercially available from Jetbest Corp. Chemsorb-326: 2-(2'-Hydroxy-3-*tert*-butyl-5-methylphenyl)-5-chlorobenzotriazole, commercially available from Chembridge Int. Corp. Dynasylan 1189: *N*-[3-(trimethoxysilyl)propyl]butylamine, commercially available from Evonik Resource and Efficiency GMBH. | | | | | | | |

**Table 2**

| | CE1 | CE2 | E1 | E2 | E3 | E4 |
|---|---|---|---|---|---|---|
| Thickness (µm) | 8.98 | 9.29 | 3.11 | 3.11 | 8.90 | 9.32 |
| UV Transmittance (%) | 2 | 0 | 0 | 0 | 2 | 0 |
| Visible Transmittance (%) | 58 | 61 | 75 | 66 | 74 | 59 |
| IR Transmittance (%) | 4 | 3 | 25 | 5 | 11 | 1 |
| SHGC | 0.31 | 0.32 | 0.47 | 0.34 | 0.41 | 0.30 |
| Visible Trans. + IR Absorb. (%) | 154 | 158 | 150 | 161 | 163 | 158 |
| Heat Ray Shielding Particle Dosage (g/m²) | 2.497 | 1.928 | 0.560 | 0.880 | 0.943 | 1.271 |

**Table 3**

| | | CE3 | CE4 | CE5 | E5 | E6 |
|---|---|---|---|---|---|---|
| Polysiloxane (g) | A3 | | 14.8 | 14.8 | 14.8 | 14.8 |
| Polyfunctional Monomer (g) | dipentaerythritol hexa(meth)acrylate | 14.8 | | | | |
| Photopolymerization Initiator (g) | 2-benzyl-2-dimethylamino-1-(4-morpholinophenyl)-butan-1-one | | | | 0.8 | 0.8 |
| | {1-[9-ethyl-6-(2-methylbenzoyl)carbazol-3-yl]ethylideneamino} acetate | | | | 0.32 | 0.32 |
| Thermal polymerization Initiator (g) | t-Butyl peroxy-2-ethylhexanoate | 1.48 | 1.48 | 1.48 | | |
| Heat ray shielding particle (g) Dispersed in Solvent | VP Disp CIT 20 DPM | | | | | |
| | CUR-2023 | 8.3 | 8.3 | | 8.3 | |
| | EM-CT-20PG | | | 8.3 | | 8.3 |
| | TSC-113 | | | | | |
| Additives (g) | Chemsorb-326 | 0.3 | 0.3 | 0.3 | 0.3 | 0.3 |
| | Dynasylan 1189 | 2.3 | 2.3 | 2.3 | 2.3 | 2.3 |
| Solvent (g) | propylene glycol monomethyl ether acetate | 28 | 28 | 28 | 28 | 28 |

**Table 4**

| | | CE3 | CE4 | CE5 | E5 | E6 |
|---|---|---|---|---|---|---|
| Curing Type | | Thermal Curing | | | UV Curing | |
| Thickness (µm) | | | 5.6 | 5.0 | 6.8 | 7.0 |
| UV Transmittance (%) | | | 12 | 8 | 11 | 4 |
| Visible Transmittance (%) | | | 74 | 63 | 71 | 66 |
| IR Transmittance (%) | | Sticky film | 40 | 28 | 43 | 26 |
| SHGC | | | 0.52 | 0.44 | 0.52 | 0.45 |
| Visible Trans. + IR Absorb. (%) | | | 134 | 135 | 128 | 140 |
| Heat Ray Shielding Particles Dosage (g/m2) | | | 2.3 | 2.4 | 1.7 | 0.7 |

## Claims

1. A heat ray shielding particle containing composition, comprising:
(1) a polysiloxane which is the hydrolysic condensation product of at least the following reactants A and B:
A. an alkoxysilane having the following structure (I)
(R¹)ₘSi(R²)ₙ(OR³)ₚ (I)
in structure (I),
R¹ is independently an organic group having at least one photopolymerizable group, R² is independently H, or an alkyl having 1-5 carbon atoms,
R³ is independently an alkyl or an alkoxyalkyl having 1-5 carbon atoms,
m is an integer of 1 or 2,
n is an integer of 0, 1 or 2,
p is an integer of 1, 2 or 3,
m + n + p = 4,
R¹, R² and R³ are optionally substituted by one or more hetero atoms,
B. an alkoxysilane having the following structure (II)
(R⁴)ₓSi(OR⁵)₄₋ₓ (II)
in structure (II),
R⁴ is independently H, or an alkyl having 1-5 carbon atoms, optionally substituted by one or more hetero atoms,
R⁵ is independently an alkyl having 1-5 carbon atoms, optionally substituted by one or more hereto atoms,
x is an integer of 0, 1, 2 or 3,
(2) a heat ray shielding particle,
(3) a photopolymerization initiator, and
(4) a solvent.

2. The composition according to claim 1, wherein R¹ of the reactant A is independently an organic group having 2-12 carbon atoms and at least one photopolymerizable group preferably selected from the group consisting of vinyl, epoxy, isocyanate, methacryl, acryl, ureido and cinnamoyl groups, more preferably reactant A is one or more selected from the group consisting of 2-(3,4-epoxycyclohexyl) ethyltrimethoxysilane, 3-glycidoxypropyl trimethoxysilane, 3-glycidoxypropyl triethoxysilane, 3-acrylamidopropyltrimethoxysilane, N-(3-acryloxy-2-hydroxypropyl)-3-aminopropyltriethoxysilane, acryloxymethyltrimethoxysilane, (3-methacrylamidopropyl)triethoxysilane, O-(methyacryloxyethyl)-N-(triethoxysilylpropyl)carbamate, N-(3-methacryloxy-2-hydroxypropyl)-3-aminopropyltriethoxysilane, methacryloxymethyltriethoxysilane, methacryloxymethyltrimethoxysilane, 3-methacryloxypropyl trimethoxysilane, 3-methacryloxypropyl triethoxysilane, 3-acryloxypropyl trimethoxysilane, methacryloxypropyltriisopropoxysilane, methacryloxypropyltris(methoxyethoxy)silane, (3-acryloxypropyl)methyldimethoxysilane, 3-(acryloxypropyl)methyldimethoxysilane, (methacryloxymethyl)methyldiethoxysilane, (methacryloxymethyl)methyldimethoxysilane, methacryloxypropylmethyldiethoxysilane, methacryloxypropylmethyldimethoxysilane.

3. The composition according to claim 1 or 2, wherein reactant B is a dialkoxysilane, trialkoxysilane, or a tetraalkoxysilane, and preferably one or more selected from the group consisting of tetramethyl orthosilicate, tetraethyl orthosilicate, tetrapropyl orthosilicate, tetrabutyl orthosilicate, methyltrimethoxysilane, methyltriethoxysilane, ethyltrimethoxysilane, ethyltriethoxysilane, propyltrimethoxysilane, propyltriethoxysilane, methyltripropoxysilane, dimethyldimethoxysilane, dimethyldiethoxysilane, diethyldiethoxysilane, and dimethyldibutoxysilane.

4. The composition according to any one of the preceding claims, wherein the hydrolysis condensation reaction includes an unsaturated carboxylic acid as a further reactant, preferably selected from the group consisting of (2Z)-2-methyl-2-nonenoic acid, (2E)-3-cyclohexyl-2-methyl-2-propenoic acid, 1,3,5,7-cyclooctatetraenecarboxylic acid, 1-cycloundecene-1-carboxylic acid, 1-cyclododecene-1-carboxylic acid, (3S)-3-isopropyl-1-cyclopentene-1-carboxylic acid, 2-methyl-3-(4-methylphenyl)acrylic acid, bicyclo[2.2.1]hept-2-ene-2,3-dicarboxylic acid, 3-methoxy-4,4-dimethyl-1-cyclopentene-1,2-dicarboxylic acid, 2a,4a,6a,6b-tetrahydrocyclopenta[cd]pentatene-1-carboxylic acid, (2Z)-2-ethyl-3-(3-hydroxyphenyl)-2-propenoic acid, 4-isothiazolecarboxylic acid, (2E)-3-(4-methylphenyl)-2-propyl-2-propenoic acid, 2-methylacrylic acid, 3-methyl-1 H-pyrazole-4-carboxylic acid, (2Z)-2-(4-chlorophenyl)-3-phenyl-2-propenoic acid, 2-{2-[(4-methoxybenzyl)oxy]-2-oxoethyl}acrylic acid, (2Z)-2-(3-methoxybenzylidene)pentanedioic acid, acrylic acid, 2-bromoacrylic acid, 2-(bromomethyl)acrylic acid, 2-ethylacrylic acid, 2-propylacrylic acid, 2-(trifluoromethyl)acrylic acid.

5. The composition according to any one of the preceding claims, wherein
the molar ratio of the reactant A to the reactant B is 20-1 : 1, preferably 10-3 : 1;
and / or
the molar ratio of the unsaturated carboxylic acid to the reactant A is 0-0.5 : 1, preferably 0.15-0.35 : 1.

6. The composition according to any one of the preceding claims, wherein the heat ray-shielding particle is one or more selected from the group consisting of tin oxide, indium oxide, zinc oxide, tungsten oxide, chromium oxide, and molybdenum oxide particles, preferably from the group consisting of tin-doped indium oxide (ITO), antimony-doped tin oxide (ATO), aluminum-doped zinc oxide (AZO), indium-doped zinc oxide (IZO), silicon-doped zinc oxide, a tungsten oxide doped with alkali metal element and/or halogen element.

7. The composition according to any one of the preceding claims, wherein the heat ray shielding fine particle has an average particle diameter of not greater than 200 nm, preferably of 80-160 nm, calculated from the specific surface area obtained by the BET method (Brunauer, Emmett and Teller's equation).

8. The composition according to any one of the preceding claims, wherein the solvent is an ether solvent or an ester solvent.

9. The composition according to any one of the preceding claims, comprising
(1) 10 - 50 %, preferably 15-35% of the polysiloxane,
(2) 1 - 10 %, preferably 1.5-6% of the heat ray-shielding particle,
(3) 0.1 - 10 %, preferably 0.5-5% of the photopolymerization initiator,
(4) 30 - 80 %, preferably 40-70% of the solvent,
based on the total weight of the composition.

10. The composition according to any one of the preceding claims, further comprising an ultraviolet-absorbing agent, an antioxidant, a light stabilizer and/or a coupling agent.

11. A heat ray shielding film formed by photo curing the heat ray shielding particle containing composition according to any one of the preceding claims.

12. A process for preparing the heat ray shielding film of claim 11, comprising the steps of:
(1) coating the composition according to any one of claims 1-10 on a substrate;
(2) drying the coated substrate to remove the solvent; and
(3) photo curing the dried composition to form the film.
